# EUROPEAN PATENT APPLICATION

(11) **EP 1 202 535 A2**
(43) Date of publication of application: **02.05.2002**
(21) Application number: 01302155.5
(22) Date of filing: 09.03.2001
(51) Int. Cl.: H04M 1/275, H04M 1/247

(54) **Information terminal equipment and storage medium**

(30) Priority: 30.10.2000 JP 2000331342
(71) Applicant: FUJITSU LIMITED, Kawasaki-shi, Kanagawa 211-8588 (JP)
(72) Inventor: Suzuki, Makoto, c/o Fujitsu Limited, Kawasaki-shi, Kanagawa 211-8588 (JP)
(74) Representative: Stebbing, Timothy Charles

(57) **Abstract**

An information terminal equipment is provided with a managing part for managing functions and/or information in a manner linked to a plurality of using situations, a switch for setting a using situation, and a control part for automatically selecting a function and/or information from the managing part depending on the using situation set by the switch, and making the selected function and/or information usable by a user.

## Description

### BACKGROUND OF THE INVENTION

This application claims the benefit of a Japanese Patent Application No.2000-331342 filed October 30, 2000, in the Japanese Patent Office, the disclosure of which is hereby incorporated by reference.

### 1. Field of the Invention

The present invention generally relates to information terminal equipments and storage media, and more particularly to an information terminal equipment which can switch information and functions to be used, and to a computer-readable storage medium which stores a program for causing a computer to switch information and functions to be used.

In this specification, an information terminal equipment refers to personal computers, electronic mail apparatuses, intelligent television apparatuses, intelligent telephone sets, mobile telephone sets, portable communication terminal equipments and the like which are designed to switch information and functions to be used. The information terminal equipment may be a portable type apparatus.

### 2. Description of the Related Art

In a conventional information terminal equipment, a user must manually select a desired function or information from all of the functions and all of the information. Because the selection is made manually, it is impossible to quickly select the desired function or information. In addition, there is a possibility of erroneously selecting the function or information.

For example, when the user is using a mobile telephone set and talking to a friend, the user may wish to let his friend know a telephone number of another friend. In this case, the user must select a directory function of the mobile telephone set. If the directory is divided into a work directory and a private directory, the user must select the private directory, and then search for a target telephone number in alphabetical order on the directory, for example. These selection and search processes are normally carried out in response to a key operation. Accordingly, if the user is not skilled or familiar with the operation of the mobile telephone set, it takes considerable time for the user to find the target telephone number, and if an erroneous operation is made, it may be necessary in some cases to restart the whole operation from the beginning.

Therefore, according to the conventional information terminal equipment, the user must manually select the desired function or information, and there were problems in that the manual selection requires a troublesome and time-consuming operation, and that there is a possibility of the user making an erroneous operation.

### SUMMARY OF THE INVENTION

Accordingly, it is a general object of the present invention to provide a novel and useful information terminal equipment and computer-readable storage medium, in which the problems described above are eliminated.

Another and more specific object of the present invention is to provide an information terminal equipment and a computer-readable storage medium, which enable quick and automatic selection of a function or information having a high possibility of being used, and enable an erroneous operation to be reduced.

Still another object of the present invention is to provide an information terminal equipment comprising a managing part managing functions and/or information in a manner linked to a plurality of using situations, a switch setting a using situation, and a control part automatically selecting a function and/or information from the managing part depending on the using situation set by the switch, and making the selected function and/or information usable by a user. According to the information terminal equipment of the present invention, it is possible to enable quick and automatic selection of a function or information having a high possibility of being used, and enable an erroneous operation to be reduced.

A further object of the present invention is to provide an information terminal equipment comprising a managing part managing functions and/or information in a manner linked to a plurality of using situations, a detector detecting a using situation, and a control part automatically selecting a function and/or information from the managing part depending on the using situation detected by the detector, and making the selected function and/or information usable by a user. According to the information terminal equipment of the present invention, it is possible to enable quick and automatic selection of a function or information having a high possibility of being used, and enable an erroneous operation to be reduced.

Another object of the present invention is to provide a computer-readable storage medium which stores a program comprising managing means for causing a computer to manage functions and/or information in a manner linked to a plurality of using situations, and control means for causing the computer to automatically select a function and/or information from the managing means depending on a using situation set by a switch, and to make the selected function and/or information usable by a user. According to the computer-readable storage medium of the present invention, it is possible to enable quick and automatic selection of a function or information having a high possibility of being used, and enable an erroneous operation to be reduced.

Still another object of the present invention is to provide a computer-readable storage medium which stores a program comprising managing means for causing a computer to manage functions and/or information in a manner linked to a plurality of using situations, detecting means for causing the computer to detect a using situation, and control means for causing the computer to automatically select a function and/or information from the managing means depending on the using situation detected by the detecting means, and to make the selected function and/or information usable by a user. According to the computer-readable storage medium of the present invention, it is possible to enable quick and automatic selection of a function or information having a high possibility of being used, and enable an erroneous operation to be reduced.

Other objects and further features of the present invention will be apparent from the following detailed description when read in conjunction with the accompanying drawings.

### BRIEF DESCRIPTION OF THE DRAWINGS

FIG. 1 is a system block diagram showing a first embodiment of an information terminal equipment according to the present invention;
FIGS. 2A and 2B are diagrams for explaining databases of personal information;
FIG. 3 is a diagram showing a displayed list of application programs having related data;
FIG. 4 is a flow chart for explaining the operation of the first embodiment;
FIG. 5 is a flow chart for explaining the operation of a second embodiment of the information terminal equipment according to the present invention;
FIG. 6 is a flow chart for explaining the operation of a third embodiment of the information terminal equipment according to the present invention; and
FIG. 7 is a flow chart for explaining the operation of a fourth embodiment of the information terminal equipment according to the present invention.

### DESCRIPTION OF THE PREFERRED EMBODIMENTS

A description will be given of various embodiments of an information terminal equipment according to the present invention and a computer-readable storage medium according to the present invention, by referring to the drawings.

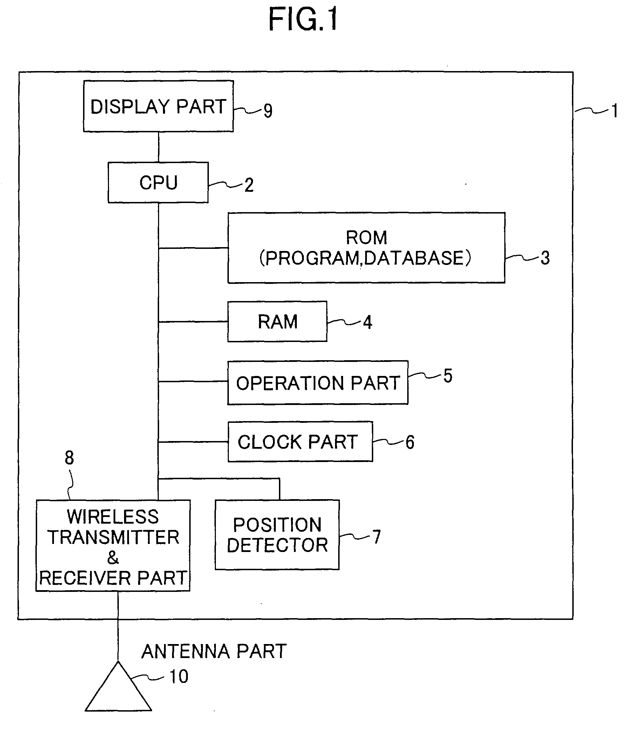

FIG. 1 is a system block diagram showing a first embodiment of the information terminal equipment according to the present invention. In this embodiment, the present invention is applied to a mobile telephone set.

An information terminal equipment (mobile telephone set) 1 generally includes a CPU 2, a ROM 3, a RAM 4, an operation part 5, a clock part 6, a position detector 7, a wireless transmitter and receiver part 8, a display part 9, and an antenna part 10 which are connected as shown in FIG. 1. The CPU 2 controls the operation of the information terminal equipment 1 as a whole. The ROM 3 has a rewritable structure, and stores programs to be executed by the CPU 2, various kinds of data, databases, and the like. The RAM 4 temporarily stores input and output data of the information terminal equipment 1, intermediate data of computing processes carried out by the CPU 2, and the like. The operation part 5 is made up of various keys or buttons including a ten-key and the like, and various switches including a power switch and the like. The clock part 6 manages time information, and manages calendar information related to the year, month, date and day, the time, time band information, and the like. The position detector 7 detects the position of the information terminal equipment 1 by a known technique such as GPS. The wireless transmitter and receiver part 8 makes transmissions and receptions via the antenna part 10 by a known technique. The display part 9 is made up of a LCD panel or the like, for example, and displays information input from the operation part 5, information and menus read from the ROM 3, and the like.

The ROM 3 and the RAM 4 may be formed by a single memory part. The operation part 5 and the display part 9 may have an integral structure using a touch panel or the like. In addition, the position detector 7 may be omitted. Furthermore, in a case where the information terminal equipment 1 is to communicate via wire, the wireless transmitter and receiver part 8 and the antenna part 10 can of course be replaced by a known transmitter and receiver part and a known connector part.

In this embodiment, a function (application program) such as a directory of the CPU 2 that manages personal information, is added with a function which links (relates) the personal information such as name, telephone number, electronic mail address (hereinafter simply referred to as a mail address), company, address and day, to another function (application program) or information. In addition, the function of linking to another function (application program) or information such as the personal information, is also added to functions (application programs) such as a scheduler, electronic mail managing software, word processing software and tabulation software. In other words, the CPU 2 manages the functions and/or information by linking the functions and/or information to a plurality of using situations or conditions. Accordingly, by detecting the using situation, it is possible to automatically select and use a function and/or information depending on the detected using situation.

For example, if an operation mode of the information terminal equipment 1 can be set by switching between a work mode which is used for business use and a private mode which is used for personal use by operating a key or switch of the operation part 5, the CPU 2 can automatically judge the functions and information linked to the set operation mode based on a database within the ROM 3. Hence, it is possible to automatically access only the functions and information linked to the set operation mode, under a control of the CPU 2. The automatically accessible functions and information are displayed on the display part 9, so that the user only needs to select a desired function and/or information from the automatically accessible functions and information. As a result, it is possible to quickly and accurately access the desired function and/or information.

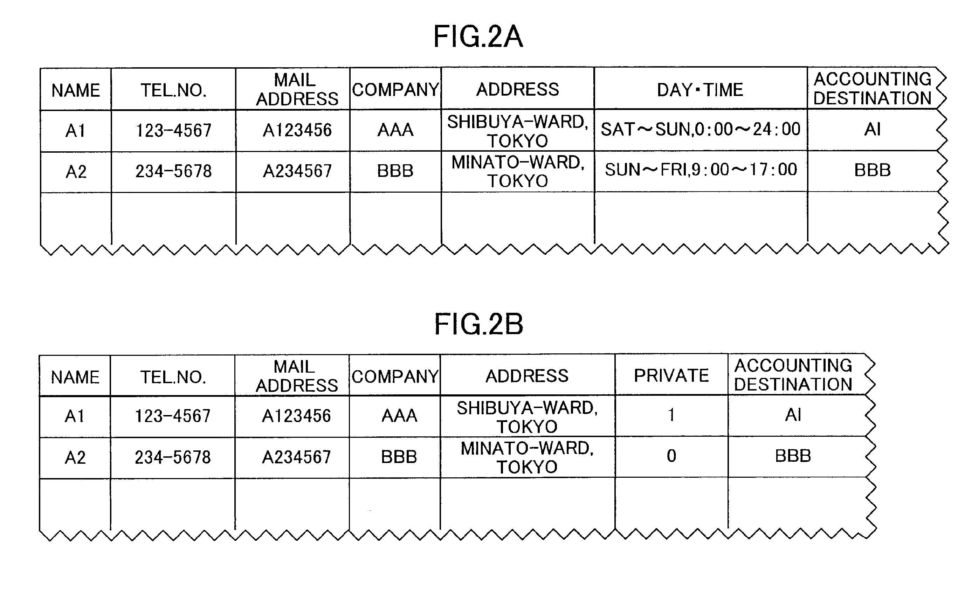

FIGS. 2A and 2B are diagrams for explaining databases of personal information. In the case shown in FIG. 2A, the database of the personal information includes the name, telephone number, mail address, company, address, day and time, and accounting destination. The personal information of this database is stored in the ROM 3 under the management of the CPU 2. The database itself can be created using an existing directory (software) function. In this embodiment, the personal information included in this database is linked to a specific using situation (or operation mode), function and information.

In the case shown in FIG. 2B, the database of the personal information includes the name, telephone number, mail address, company address, private, and accounting destination. The personal information of this database is stored in the ROM 3 under the management of the CPU 2. The database itself can be created using an existing directory (software) function. In this embodiment, the personal information included in this database is linked to a specific using situation (or operation mode), function and information. In the "private" column of the database, a value "1" is set when the operation mode of the information terminal equipment 1 is the private mode, and a value "0" is set when the operation mode of the information terminal equipment 1 is the work mode.

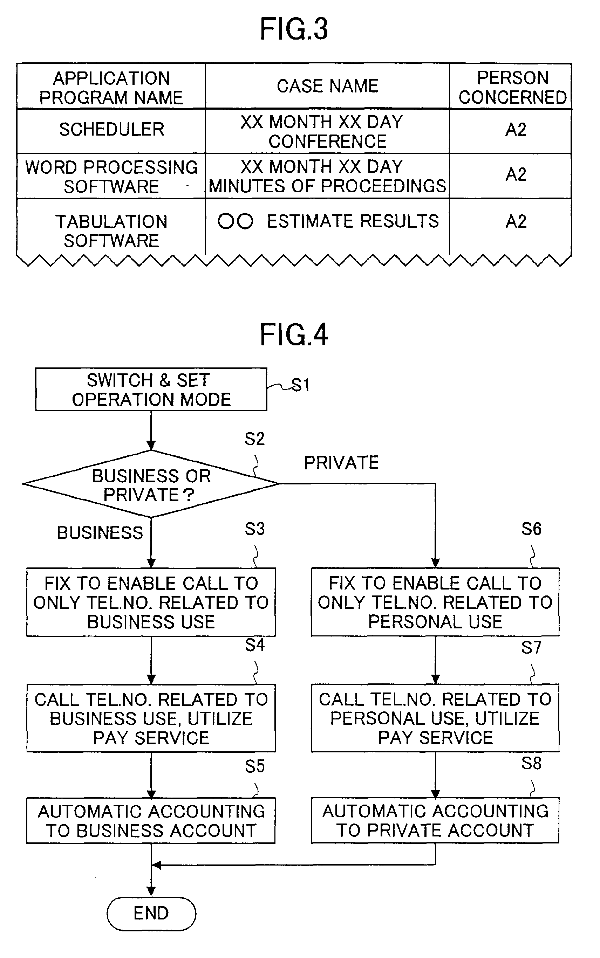

FIG. 3 is a diagram showing a list of application programs (functions) having related data, displayed on the display part 9. The displayed list includes the application program name, case name, and person concerned. For the sake of convenience, FIG. 3 shows a case where the scheduler, the word processing software and the tabulation software have related data. These application programs are linked, and are linked to other functions and/or information if necessary.

The linking itself of the functions and/or information may be realized by a known technique. For example, the functions and/or information may be linked by adding the same flag or index, and the link may be formed hierarchically.

FIG. 4 is a flow chart for explaining the operation of this first embodiment. The operation shown in FIG. 4 corresponds to the process carried out by the CPU 2.

In FIG. 4, a step S1 detects the switching of the operation mode of the information terminal equipment 1 in response to an operation of the key or switch of the operation part 5 by the user. A step S2 decides whether the operation mode is switched to the work mode for business use or the private mode for personal use. In the case of the work mode, a step S3 fixes the information terminal equipment 1 to a mode capable of calling only telephone numbers related to business use. A step S4 automatically sets the information terminal equipment 1 to a state which can easily call the telephone numbers related to business use and easily utilize pay services which can be utilized. For example, the telephone numbers related to business use which may be called, and the pay services which may be utilized, are displayed on the display part 9 for selection by the user. Of course, the step S4 may display, on the display part 9, the personal information which is related to the telephone numbers related to business use within the database shown in FIG. 2A, and the application programs which may be utilized in the work mode and the information related to the application programs within the displayed list of application programs shown in FIG. 3, and the display may be made in a selectable manner for selection by the user. In addition, a step S5 automatically makes the accounting to the business account if the call to the telephone number related to business use and/or the pay service is utilized in the step S4, and the process ends.

On the other hand, in the case of the private mode, a step S6 fixes the information terminal equipment 1 to a mode capable of calling only telephone numbers related to personal use. A step S7 automatically sets the information terminal equipment 1 to a state which can easily call the telephone numbers related to personal use and easily utilize pay services which can be utilized. For example, the telephone numbers related to personal use which may be called, and the pay services which may be utilized, are displayed on the display part 9 for selection by the user. Of course, the step S7 may display, on the display part 9, the personal information which is related to the telephone numbers related to personal use within the database shown in FIG. 2A or 2B, and the application programs which may be utilized in the private mode and the information related to the application programs within the displayed list of application programs shown in FIG. 3, and the display may be made in a selectable manner for selection by the user. In addition, a step S8 automatically makes the accounting to the private (personal) account if the call to the telephone number related to personal use and/or the pay service is utilized in the step S7, and the process ends.

Next, a description will be given of a second embodiment of the information terminal equipment according to the present invention. In this second embodiment of the information terminal equipment and third and fourth embodiments of the information terminal equipment which will be described later, the basic structure of the information terminal equipment may be the same as that of the first embodiment shown in FIG. 1, and an illustration and description thereof will be omitted.

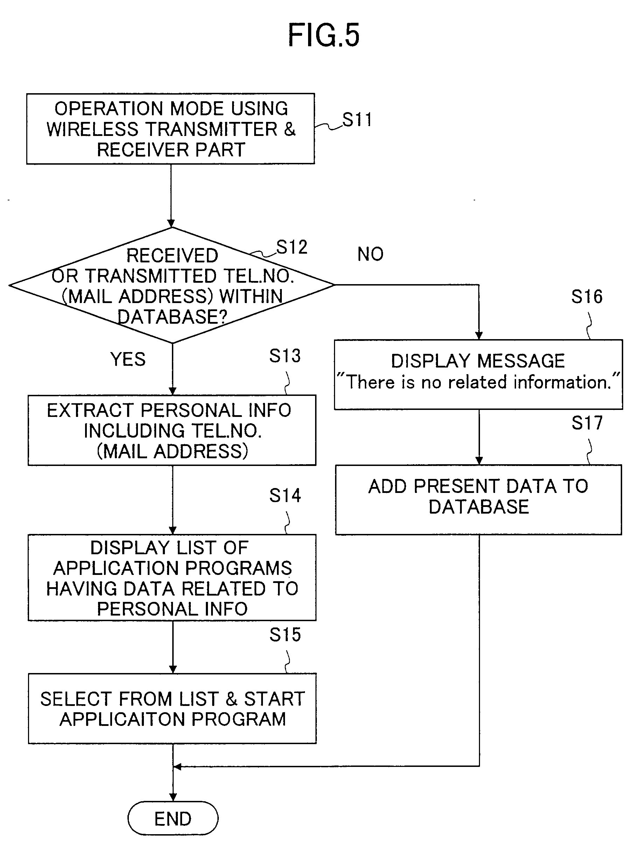

FIG. 5 is a flow chart for explaining the operation of this second embodiment. The operation shown in FIG. 5 corresponds to the process carried out by the CPU 2.

In FIG. 5, a step S11 detects the selection of an operation mode of the information terminal equipment 1 from one of telephone reception, telephone transmission, mail reception and mail transmission modes which use the wireless transmitter and receiver part 8, in response to an operation of the key or switch of the operation part 5 by the user. A step S12 decides whether or not the telephone number of the other party of the telephone reception or telephone transmission is included in the database within the ROM 3 or, decides whether or not the mail address of the other party of the mail reception or mail transmission is included in the database within the ROM 3. If the decision result in the step S12 is YES, a step S13 automatically extracts the personal information such as the name related to the telephone number or the mail address of the other party, from the database shown in FIG. 2A or 2B, and displays the extracted personal information on the display part 9 for easy utilization or selection by the user. A step S14 displays the application programs and/or information related to the personal information extracted by the step S13 on the display part 9, within the displayed list of application programs shown in FIG. 3, and the display may be made in a selectable manner for selection by the user. A step S15 starts one or a plurality of functions which are selected, and the process ends.

On the other hand, if the decision result in the step S12 is NO, a step S16 displays on the display part 9 a message such as "There is no related information.". In addition, a step S17 adds the present data, that is, the telephone number or mail address of the other party, to the database within the ROM 3, and the process ends.

Therefore, according to this embodiment, the using situation of the information terminal equipment 1 is detected based on the type of information which is transmitted or received via the wireless transmitter and receiver part 8. In other words, if the using situation is the telephone receiving mode, for example, the CPU 2 can automatically judge the functions and/or information linked to the information (telephone number) which is received by the telephone reception, based on the database within the ROM 3. In addition, under the control of the CPU 2, it is possible to automatically access only the linked functions and/or information. The automatically accessible functions and/or information are displayed on the display part 9.

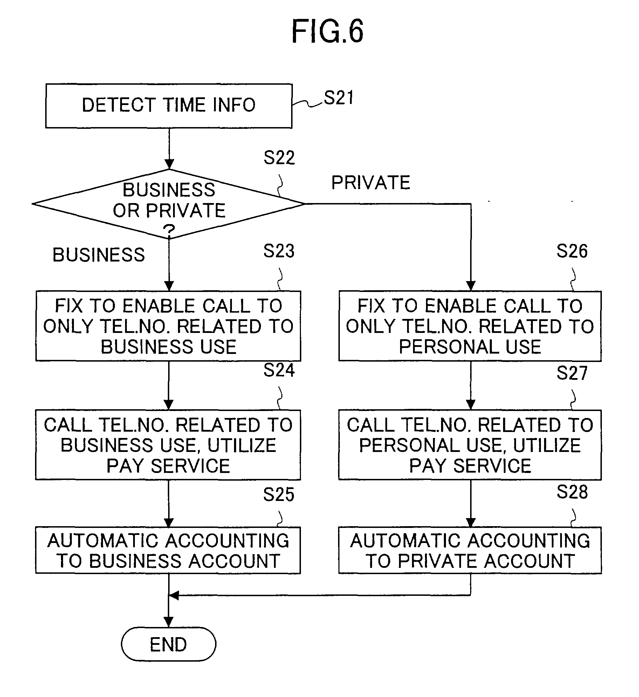

Next, a description will be given of the third embodiment of the information terminal equipment according to the present invention. FIG. 6 is a flow chart for explaining the operation of this third embodiment. The operation shown in FIG. 6 corresponds to the process carried out by the CPU 2.

In FIG. 6, a step S21 detects day and time information based on time information from the clock part 6. A step S22 decides whether it is business time or private time, based on the detected time information. For example, the business time is a time band of 9:00 to 17:00, Monday to Friday, when the user works. On the other hand, the private time is a time band other than the business time. In the case of the business time, a step S23 fixes the information terminal equipment 1 to a mode which can call only to the telephone numbers related to business use. A step S24 automatically sets the information terminal equipment 1 to a state which can easily call the telephone numbers related to business use and can easily utilize the pay services which can be utilized. For example, the telephone numbers related to business use which may be called, and the pay services which may be utilized, are displayed on the display part 9 for selection by the user. Of course, the step S24 may display, on the display part 9, the personal information which is related to the telephone numbers related to business use within the database shown in FIG. 2A, and the application programs which may be utilized in the work mode and the information related to the application programs within the displayed list of application programs shown in FIG. 3, and the display may be made in a selectable manner for selection by the user. In addition, a step S25 automatically makes the accounting to the business account if the call to the telephone number related to business use and/or the pay service is utilized in the step S24, and the process ends.

On the other hand, in the case of the private time, a step S26 fixes the information terminal equipment 1 to a mode which can call only to the telephone numbers related to personal use. A step S27 automatically sets the information terminal equipment 1 to a state which can easily call the telephone numbers related to personal use and can easily utilize the pay services which can be utilized. For example, the telephone numbers related to personal use which may be called, and the pay services which may be utilized, are displayed on the display part 9 for selection by the user. Of course, the step S27 may display, on the display part 9, the personal information which is related to the telephone numbers related to personal use within the database shown in FIG. 2A, and the application programs which may be utilized in the private mode and the information related to the application programs within the displayed list of application programs shown in FIG. 3, and the display may be made in a selectable manner for selection by the user. In addition, a step S28 automatically makes the accounting to the personal account if the call to the telephone number related to personal use and/or the pay service is utilized in the step S27, and the process ends.

According to this embodiment, the using situation is detected base on the time information obtained from the clock part 6. In other words, if the using situation is the private time, for example, the CPU 2 can automatically judge the functions and/or information linked to the private time based on the database within the ROM 3, and it becomes possible to automatically access only the linked functions and/or information under the control of the CPU 2. The automatically accessible functions and/or information are displayed on the display part 9.

In the case of the database shown in FIG. 2B, it is possible to judge whether the operation mode of the information terminal equipment 1 is the private mode or the business mode based on whether the value set in the "private" column is "1" or "0", instead of using the time information.

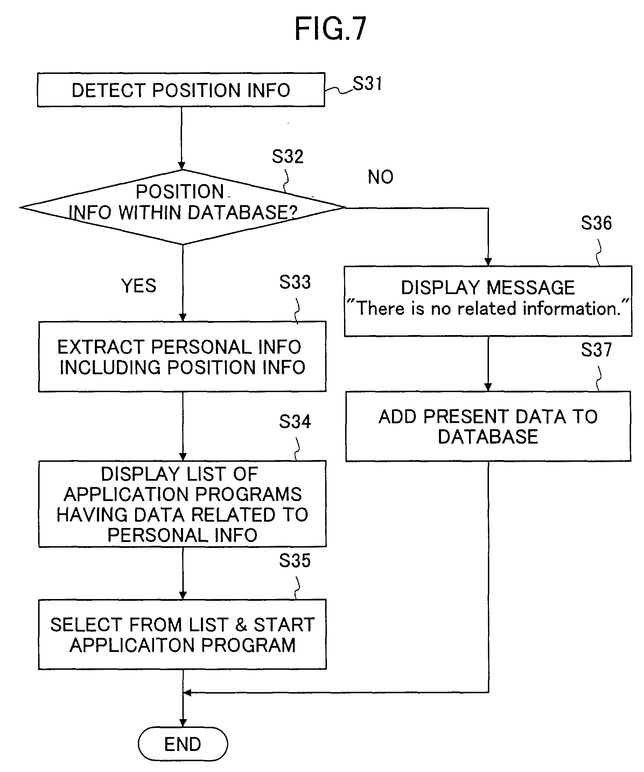

Next, a description will be given of the fourth embodiment of the information terminal equipment according to the present invention. FIG. 7 is a flow chart for explaining the operation of this fourth embodiment. The operation shown in FIG. 7 corresponds to the process carried out by the CPU 2.

In FIG. 7, a step S31 detects position information related to the present position of the information terminal equipment 1 by the position detector 7. A step S32 decides whether or not the detected position information is included in the database within the ROM 3. For example, if the present position is within the Shibuya-Ward of Tokyo, the step S32 decides whether or not information having the Shibuya-Ward as the address is included in the database. If the decision result in the step S32 is YES, a step S33 automatically extracts the personal information such as the name including the detected position information, from the database shown in FIG. 2A or 2B, and displays the extracted personal information on the display part 9 for easy utilization or selection by the user. A step S34 displays the application programs and/or information related to the personal information extracted by the step S33 on the display part 9, within the displayed list of application programs shown in FIG. 3, and the display may be made in a selectable manner for selection by the user. A step S35 starts one or a plurality of functions which are selected, and the process ends.

On the other hand, if the decision result in the step S32 is NO, a step S36 displays on the display part 9 a message such as "There is no related information.". In addition, a step S37 adds the present data, that is, the detected position information, to the database within the ROM 3, and the process ends.

Therefore, according to this embodiment, the using situation of the information terminal equipment 1 is detected based on the position information detected by the position detector 7. In other words, if the using situation is within the Shibuya-Ward as described above, for example, the CPU 2 can automatically judge the functions and/or information linked to the address within the Shibuya-Ward based on the database within the ROM 3, and it becomes possible to automatically access only the linked functions and/or information under the control of the CPU 2. The automatically accessible functions and/or information are displayed on the display part 9.

The computer-readable storage medium according to the present invention is formed by a recording medium which stores a program for causing a computer to carry out the operation of any one of the first through fourth embodiments of the information terminal equipment according to the present invention described above. In the case of the information terminal equipment 1 shown in FIG. 1, the computer is formed by the CPU 2, and the recording medium is formed by the ROM 3 or the RAM 4. Of course, the recording medium forming the computer-readable storage medium is not limited to semiconductor memory devices such as the ROM and the RAM, and any type of medium capable of storing the program in a manner readable by the computer, such as magnetic disks, magneto-optical disks, CD-ROMs and IC card memories, may be used as the recording medium.

In each of the embodiments described above, the functions and/or information which are displayed for selection by the user is selectable by the key or switch of the operation part 5. However, if the information terminal equipment 1 is provided with a voice recognition part, it is of course possible to select the displayed functions and/or information using a known voice recognition technique.

In addition, in the described embodiments, the information terminal equipment is a mobile telephone set. However, the information terminal equipment is not limited to the mobile telephone set, and the present invention is similarly applicable to personal computers, electronic mail apparatuses, intelligent television apparatuses, intelligent telephone sets, mobile telephone sets, portable communication terminal equipments and the like which are designed to switch information and functions to be used. Moreover, the information terminal equipment is not limited to a portable type apparatus.

Further, the present invention is not limited to these embodiments, but various variations and modifications may be made without departing from the scope of the present invention.

## Claims

1. An information terminal equipment **characterized by**:
a managing part managing functions and/or information in a manner linked to a plurality of using situations;
a switch setting a using situation; and
a control part automatically selecting a function and/or information from the managing part depending on the using situation set by the switch, and making the selected function and/or information usable by a user.

2. The information terminal equipment as claimed in claim 1, **characterized in that** said switch sets the using situation to a business mode or a private mode.

3. An information terminal equipment **characterized by**:
a managing part managing functions and/or information in a manner linked to a plurality of using situations;
a detector detecting a using situation; and
a control part automatically selecting a function and/or information from the managing part depending on the using situation detected by the detector, and making the selected function and/or information usable by a user.

4. The information terminal equipment as claimed in claim 3, **characterized in that** said detector detects the using situation based on information received from another party.

5. The information terminal equipment as claimed in claim 4, **characterized in that** said detector detects the using situation based on a telephone number or an electronic mail address received from the other party.

6. The information terminal equipment as claimed in claim 3, **characterized in that** said detector detects the using situation based on information transmitted to another party.

7. The information terminal equipment as claimed in claim 6, **characterized in that** said detector detects the using situation based on a telephone number or an electronic mail address transmitted to the other party.

8. The information terminal equipment as claimed in claim 3, further **characterized by**:
a transmitter and receiver part transmitting and receiving information,
said detector detecting the using situation based on a type of information transmitted and received via the transmitter and receiver part.

9. The information terminal equipment as claimed in claim 3, **characterized in that** said detector detects the using situation based on time information.

10. The information terminal equipment as claimed in claim 3, **characterized in that** said detector detects the using situation based on position information.

11. The information terminal equipment as claimed in claim 3, **characterized in that** said detector detects the using situation based on at least one of information received from another party, information transmitting to another party, time information and position information.

12. The information terminal equipment as claimed in any of claims 1 to 11, **characterized in that** said control part determines an accounting destination depending on whether the using situation is a business mode or a private mode.

13. The information terminal equipment as claimed in any of claims 1 to 12, further **characterized by**:
a display part,
said control part displaying the automatically selected function and/or information on the display part in a manner usable by the user.

14. The information terminal equipment as claimed in any of claims 1 to 13, **characterized in that** said managing part manages the linked functions and/or information as a database, and automatically adds to the database data which depend on the using situation and are not included in the database.

15. A computer-readable storage medium which stores a program **characterized by**:
managing means for causing a computer to manage functions and/or information in a manner linked to a plurality of using situations; and
control means for causing the computer to automatically select a function and/or information from the managing means depending on a using situation set by a switch, and to make the selected function and/or information usable by a user.

16. A computer-readable storage medium which stores a program **characterized by**:
managing means for causing a computer to manage functions and/or information in a manner linked to a plurality of using situations;
detecting means for causing the computer to detect a using situation; and
control means for causing the computer to automatically select a function and/or information from the managing means depending on the using situation detected by the detecting means, and to make the selected function and/or information usable by a user.

17. The computer-readable storage medium as claimed in claim 15, **characterized in that** said detecting means causes the computer to detect the using situation based on at least one of information received from another party, information transmitting to another party, time information and position information.
